# EUROPÄISCHE PATENTSCHRIFT

(11) **EP 1 087 859 B1**
(45) Veröffentlichungstag und Bekanntmachung des Hinweises auf die Patenterteilung: **23.04.2003**
(21) Anmeldenummer: 99927958.1
(22) Anmeldetag: 11.06.1999
(51) Int. Cl.: B23Q 17/00, B23B 31/26, G01L 5/00

(54) **EINZUGSKRAFTMESSVORRICHTUNG**
DEVICE FOR MEASURING PULLING-IN FORCE
DISPOSITIF DE MESURE DE FORCE DE SERRAGE

(30) Priorität: 15.06.1998 DE 19826577
(43) Veröffentlichungstag der Anmeldung: 04.04.2001
(73) Patentinhaber: Gühring, Jörg, Dr., 72458 Albstadt (DE)
(72) Erfinder: SCHLAGENHAUF, Uwe, 72488 Sigmaringen (DE)
(74) Vertreter: Winter, Brandl, Fürniss, Hübner, Röss, Kaiser, Polte Partnerschaft
(86) Internationale Anmeldenummer: EP9904046
(87) Internationale Veröffentlichungsnummer: WO99065648

(56) Entgegenhaltungen:
- EP-A- 0 303 564
- DE-A- 3 829 846
- PATENT ABSTRACTS OF JAPAN vol. 8, no. 120 (M-300) [1557], 6. Juni 1984 (1984-06-06) & JP 59 024944 A (YAMAZAKI TEKKOSHO K.K.), 8. Februar 1984 (1984-02-08)

## Beschreibung

Die vorliegende Erfindung betrifft eine Einzugskraftmeßvorrichtung zum Messen der Einzugskraft, die ein Werkzeugträgerteil, wie z.B. ein Werkzeugsystemmodul, beispielsweise in Form einer Werkzeug-Grundaufnahme, bei Ankupplung an eine zugehörige Handhabungseinrichtung, wie z.B. eine Spindel einer Werkzeugmaschine, beispielsweise in Form einer Bohr-, Dreh- oder Fräsmaschine, bei Betätigung eines auf Seiten der Handhabungseinrichtung vorgesehenen Spannsystems erfährt. Als Handhabungseinrichtung kommt dabei jedes Bauteil, beispielsweise auch ein weiteres Werkzeugsystemmodul in Betracht, das ein geeignet angepaßtes Spannsystem zur Ankupplung eines Werkzeugträgerteils aufweist.

Im Zuge der technischen Entwicklung moderner Fertigungsanlagen, die mit automatischen Werkzeugwechselsystemen ausgestattet sind, wurde das Bedürfnis nach modular aufgebauten Werkzeugsystemen immer größer. Bei derartigen Systemen kommt beispielsweise ein mit hoher Präzision gefertigter Spannschaft einer Werkzeug-Grundaufnahme zum Einsatz, an den ein System verschiedener Werkzeuge angekuppelt werden kann. An ein Kupplungs- bzw. Spannsystem zur Ankupplung der Werkzeug-Grundaufnahme, beispielsweise einer HSK (Hohlschaftkegel)-Aufnahme, an eine Werkzeugmaschinenspindel werden hohe Anforderungen im Hinblick auf eine stabile und kraftschlüssige Verbindung im Bereich der Schnittstelle zwischen den zu kuppelnden Bauteilen gestellt. Ist die tatsächliche Einzugskraft beispielsweise niedriger als die vom Maschinenhersteller festgelegte Soll-Einzugskraft, verschlechtert sich das dynamische Verhältnis zwischen Werkzeugmaschinenspindel und Werkzeug-Grundaufnahme. Dies führt zu einer Reduzierung der Zerspanungsleistung, einem erhöhten Werkzeugverschleiß, möglicherweise sogar zum Werkzeugbruch, einer Verringerung der Standzeit, einer Verschlechterung der erreichbaren Oberflächengüte sowie zu einer Belastung der Werkzeugmaschinenspindel und von Führungen. Bei der Ankupplung von einer Werkzeug-Grundaufnahme an eine Werkzeugmaschinenspindel ist die Höhe und Einhaltung der Einzugskraft daher von größter Bedeutung.

Als Schnittstellenverbindungen finden in der Industrie neben herkömmlichen Steilkegel-Schnittstellen zahlreiche andere herstellerspezifische Schnittstellen, vorwiegend aber die Hohlschaftkegel-Schnittstelle Anwendung, bei denen ein als Hohlschaftkegel ausgestalteter axialer Fortsatz eines Bauteils, beispielsweise der vorstehend erwähnten Werkzeug-Grundaufnahme, bei Betätigung eines Spannsystems, beispielsweise eines 3-Klauen-Spannsystems, in eine entsprechende Aufnahme an einer Handhabungseinrichtung, beispielsweise der vorstehend erwähnten Werkzeugmaschinenspindel, eingezogen wird.

Zur Sicherstellung der Funktion des Spannsystems, d.h. der erforderlichen Spann- bzw. Einzugskraft, wird für alle Spannsysteme eine technische Prüfmöglichkeit zur Messung der Einzugskraft gefordert. Derzeit gängige Einzugskraftmeßvorrichtungen arbeiten elektronisch und sind aufgrund einer sehr aufwendigen Technik mit Dehnmeßstreifen relativ teuer und empfindlich gegen Stöße und Verschmutzung unter Produktionsbedingungen. Zudem erfordern elektronisch arbeitende Einzugskraftmeßvorrichtungen eine Energieversorgung beispielsweise über das Stromnetz oder über Batterien.

So ist beispielsweise aus der Offenlegungsschrift DE 38 29 846 ein elektronisches Einzugskraft-Meßsystem für Werkzeug-Spannvorrichtungen von Werkzeugmaschinen bekannt, die eine Spindel-Werkzeugaufnahme für einen Werkzeugschaft und ein Spannglied zur axialen Spannung des Werkzeugschaftes an der Werkzeugaufnahmee aufweisen. Das Einzugskraft-Meßsystem umfaßt einen an die Werkzeugaufnahme und für die Spannverbindung mit dem Spannglied angepaßten, einstückig ausgebildeten Prüfschaft, der ein von der Spannkraft beeinflußtes Meßglied zur Beeinflußung einer Erfassungseinrichtung für die Spannkraft aufweist. Das Meßglied ist ein die Spannkraft unter mechanischer Verformung aufnehmender Meßkörper, beispielsweise ein oder mehrere Dehnmeßstreifen.

Aus EP 0303564 A2 und JP 59 024944 A sind Einzugskraftmeßvorrichtungen mit hydraulischen Druckmeßvorrichtungen, z.B. Manometer, bekannt.

Aufgabe der vorliegenden Erfindung ist es nun, eine gegenüber den herkömmlichen Einzugskraftmeßvorrichtungen preisgünstige, stoßfeste, schmutzunempfindliche sowie kompakt gebaute und energetisch autark arbeitende Einzugskraftmeßvorrichtung zum Messen der Einzugskraft, die ein Werkzeugträgerteil bei Ankupplung an eine zugehörige Handhabungseinrichtung erfährt, zu schaffen.

Diese Aufgabe wird durch die Einzugskraftmeßvorrichtung gemäß den Merkmalen des Patentanspruchs 1 gelöst.

Erfindungsgemäß wird eine Einzugskraftmeßvorrichtung geschaffen, bei der zur Messung der Einzugskraft auf ein Einzugsteil ein bestimmter physikalischer Effekt ausgenutzt wird, bei dem ein definierter Zusammenhang zwischen der über das Einzugsteil auf den Verformungskörper aufgebrachten Kraft und der daraus resultierenden Formänderung des Verformungskörpers besteht. In Abhängigkeit von der konstruktiven Gestaltung und dem funktionellen Zusammenwirken der einzelnen Bauteile der Einzugskraftmeßvorrichtung kann die auf das Einzugsteil ausgeübte Einzugskraft als eine Zug- oder Druckkraft auf den Verformungskörper übertragen werden, wodurch der Verformungskörper dementsprechend eine Dehnung oder Stauchung erfährt. Aus der dabei auftretenden Längenänderung des Verformungkörpers läßt sich nach dem definierten Kraft-Längenänderung-Zusammenhang schließlich in einfacher Weise mittels einer mechanischen Meßuhr die auf den Verformungskörper und damit auf das Einzugsteil aufgebrachte Kraft messen. Die erfindungsgemäße Einzugskraftmeßvorrichtung arbeitet daher rein mechanisch und völlig unabhängig vom Netz oder von Batterien. Des weiteren zeichnet sie sich durch einen in technischer Hinsicht relativ einfachen und damit preisgünstigen Aufbau aus, der in der einfachsten Ausgestaltung ohne jegliche Elektronik auskommt.

Die erfindungsgemäße Einzugskraftmeßvorrichtung zeichnet sich ferner durch eine hohe Flexibilität hinsichtlich ihrer Anwendung aus. Sie ist im wesentlichen zur Messung der Spannkraft aller Schnittstellen-Spannsysteme, d.h. auf alle gängigen Schnittstellenverbindungen, anwendbar, bei denen zwei zu kuppelnde Teile axial aneinander gespannt werden. Soll beispielsweise die Einzugskraft einer Werkzeug-Grundaufnahme in eine Aufnahme auf Seiten einer Werkzeugmaschinenspindel gemessen werden, so wird die erfindungsgemäße Einzugskraftmeßvorrichtung anstelle der Werkzeug-Grundaufnahme an die Werkzeugmaschinenspindel angekuppelt. Die erfindungsgemäße Einzugskraftmeßvorrichtung weist daher konstruktiv wesentliche Merkmale auf, die auch bei einer Werkzeug-Grundaufnahme anzutreffen sind, d.h. eine Stützfläche, die sich bei Ankupplung an die Werkzeugmaschinenspindel an einer an dieser vorgesehenen Stützfläche abstützt, und ein als Einzugsschaft der Werkzeug-Grundaufnahme fungierendes Einzugsteil, das die Einzugskraft des Spannsystems erfährt. Im Gegensatz zur Werkzeug-Grundaufnahme ist bei der erfindungsgemäßen Einzugskraftmeßvorrichtung jedoch die Stützfläche konstruktiv von dem als Schaft fungierenden Einzugsteil getrennt, so daß das Einzugsteil relativ zum Stützteil bewegt werden kann. Das Stützteil und das Einzugsteil stehen, wie vorstehend beschrieben, durch den Verformungskörper miteinander in Verbindung.

Vorteilhafte Ausgestaltungen der erfindungsgemäßen Einzugskraftmeßvorrichtung sind Gegenstand der Unteransprüche.

In der Weiterbildung nach Unteranspruch 2 ist der Verformungskörper vorteilhafterweise so gewählt und unter Berücksichtigung der bei Betätigung des Spannsystems zu erwartenden Maximalkräfte dimensioniert, daß er bei Betätigung des Spannsystems elastische Verformungen erfährt. In diesem Fall kann ein linearer Kraft-Verformung-Zusammenhang zur Messung der Einzugskraft ausgenutzt werden.

Die Wahl der Stützflächenpaarung zwischen dem Stützteil und der Handhabungseinrichtung als ringförmige Planflächen nach Unteranspruch 3 ermöglicht eine querkraftfreie und stabile Ankupplung der erfindungsgemäßen Einzugskraftmeßvorrichtung an die Handhabungseinrichtung und damit eine zuverlässige Messung der Einzugskraft.

Die Weiterbildung nach Unteranspruch 4 trägt der Tatsache Rechnung, daß herkömmliche Werkzeugträgerteile zur Ankupplung an eine Handhabungseinrichtung oftmals einen in eine axiale Aufnahme auf Seiten der Handhabungseinrichtung einzuziehenden kegelförmigen Schaft aufweisen, und ermöglicht somit eine möglichst praxisnahe Messung der auf die Werkzeugträgerteile aufgebrachten Einzugskräfte.

Mit der Weiterbildung nach Unteranspruch 5 werden die beim Einziehen des Schaftabschnitts in die Aufnahme zwischen der Mantelfäche des Schaftabschnitts und der Innenmantelfläche der Aufnahme für gewöhnlich auftretenden Reibkräfte ausgeschaltet, so daß dadurch die Messung der maximalen Einzugskraft des Spannsystems ermöglicht wird. Die Querschnitte des Stützteils, des Einzugsteils und des Verformungskörpers werden dabei so gewählt, daß selbst im Fall des Auftretens zu erwartender Maximalkräfte und damit maximaler Längenänderungen der Schaftabschnitt des Einzugsteils noch mit Spiel in die Aufnahme der Handhabungseinrichtung einziehbar ist.

Nach Unteranspruch 6 weist der Schaftabschnitt bevorzugt die Form eines Hohlschaftkegels auf; er kann jedoch ebenso im Hinblick auf derzeit gängige Schäfte eine andere Form, beispielsweise die Form eines Steilkegels, aufweisen.

Die Weiterbildung nach Unteranspruch 7, wonach der Schaftabschnitt zylindrisch ausgebildet ist, gibt eine weitere Anwendungsmöglichkeit der erfindungsgemäßen Einzugskraftmeßvorrichtung an; beispielsweise läßt sich das Prinzip der erfindungsgemäßen Einzugskraftmeßvorrichtung auch auf eine VDI-Schaft-Schnittstellenverbindung übertragen.

Im Hinblick auf einen möglichst kompakten und schmutz-unempfindlichen Aufbau der erfindungsgemäßen Einzugskraftmeßvorrichtung weist nach Unteranspruch 8 das Stützteil vorteilhafterweise die Form einer Glocke auf, die einen axial an den Schaftabschnitt anschließenden Zylinderabschnitt des Einzugsteils sowie den zwischen dem Stützteil und dem Einzugsteil eingesetzten Verformungskörper gegenüber der Außenumgebung abschirmt.

Gemäß der vorteilhaften Weiterbildung nach den Unteransprüchen 9 oder 10 ist der Verformungskörper ein mit dem Zylinderabschnitt des Einzugsteils und/oder dem Stützteil fest verbundener, beispielsweise verschraubter, Dehnkörper, so daß in diesem Fall eine der Zugbeanspruchung proportionale Längenänderung in Form einer Dehnung des Dehnkörpers zur Messung der Einzugskraft ausgenutzt wird. Als Dehnkörper wird bevorzugt eine Dehnschraube verwendet. Ebenso wäre es jedoch auch denkbar, einen Federkörper einzusetzen.

Der Unteranspruch 11 zeigt im Hinblick auf die Verwendung einer herkömmlichen mechanischen Meßuhr als die Meßeinrichtung zur Erfassung der Verformung der Dehnschraube eine vorteilhafte Weiterbildung der Dehnschraube, die darin besteht, daß die Dehnschraube eine axiale Bohrung aufweist, in welcher ein mit der Meßuhr funktionell in Verbindung stehender Bolzen, nach Unteranspruch 14 beispielsweise eine Verlängerung des Meßbolzens der Meßuhr, eingesetzt ist.

Mit der Weiterbildung nach Unteranspruch 12, wonach eine Einstelleinrichtung zur Einstellung der axialen Lage des Bolzens vorgesehen ist, ergibt sich in einfacher Weise die Möglichkeit einer Feineinstellung des Meßbereichs der Einrichtung zur Erfassung der Verformung. Gemäß Unteranspruch 13 ist die Einstelleinrichtung der Einfachheit halber als eine Stellschraube, beispielsweise eine Innensechskantschraube, ausgeführt, die in eine Gewindebohrung geschraubt ist, welche in dem Endabschnitt der Dehnschraube ausgebildet ist, der mit dem Zylinderabschnitt des Einzugsteils verschraubt ist.

Nachstehend werden anhand schematischer Zeichnungen bevorzugte Ausführungsbeispiele der erfindungsgemäßen Einzugskraftmeßvorrichtung erläutert. Es zeigen:
Fig. 1 ein erstes Ausführungsbeispiel der erfindungsgemäßen Einzugskraftmeßvorrichtung zur Anwendung für eine Hohlschaftkegel-Schnittstelle;
Fig. 2 eine Abwandlung des ersten Ausführungsbeispiels der erfindungsgemäßen Einzugskraftmeßvorrichtung;
Fig. 3 ein zweites Ausführungsbeispiel der erfindungsgemäßen Einzugskraftmeßvorrichtung zur Anwendung für eine Steilkegel-Schnittstelle; und
Fig. 4 ein drittes Ausführungsbeispiel der erfindungsgemäßen Einzugskraftmeßvorrichtung zur Anwendung für eine VDI- bzw. Zylinder-Schnittstelle.

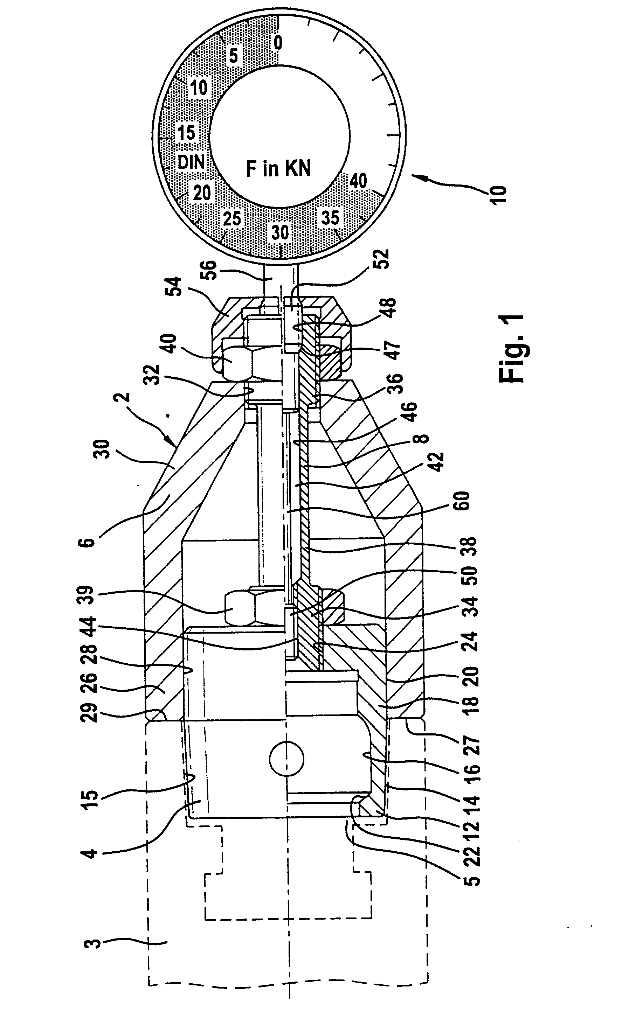

In Fig. 1 ist als ein erstes Ausführungsbeispiel der vorliegenden Erfindung eine mit dem Bezugszeichen 2 bezeichnete Einzugskraftmeßvorrichtung gezeigt, welche zur Messung der axialen Einzugskraft eines Spannsystems einer HSK-Schnittstellenverbindung, beispielsweise einer HSK-100-Schnittstellenverbindung, entwickelt wurde. In Fig. 1 ist mit dem Bezugszeichen 3 des weiteren eine als Handhabungseinrichtung fungierende Werkzeugmaschinenspindel durch gestrichelte Linien schematisiert dargestellt. Die Einzugskraftmeßvorrichtung 2 besteht im wesentlichen aus einem Einzugsteil 4, einem Stützteil 6, einer als Verformungskörper fungierenden Dehnschraube 8 und einer als Krafterfassungsvorrichtung fungierenden Meßuhr 10. Diese Bauteile werden nachstehend näher beschrieben.

Wie es aus der Darstellung in Fig. 1 erkennbar ist, weist das Einzugsteil 4, das aus fertigungstechnischen Gründen bevorzugt als ein rotationssymmetrischer Körper ausgebildet ist, einen Schaftabschnitt 12 in Form eines Hohlschaftkegels (HSK) mit einer Kegelmantelfläche 14 an seiner Außenseite und einer nach DIN-Norm hinterschnittenen oder hinterdrehten Innenausnehmung 16 an seiner Innenseite sowie einen Führungsabschnitt 18 mit einer Zylindermantelfläche 20 an seiner Außenseite auf. Um die axiale Einzugskraft eines (nicht dargestellten) Spannsystems auf Seiten der Werkzeugmaschinenspindel 3, zu messen, wird der Schaftabschnitt 12 in eine an der Werkzeugmaschinenspindel vorgesehene Aufnahme 5 eingesetzt. Bei Betätigung des Spannsystems werden (ebenfalls nicht dargestellte) Spannelemente in die Innenausnehmung 16 eingeschwenkt, bis sich an den Spannelementen ausgebildete Keilflächen satt und mit zunehmender Kontaktkraft an einer Schrägfläche 22 der Innenausnehmung 16 anlegen. Die axiale Komponente der dabei auftretenden Normalkräfte zwischen den Keilflächen an den Spannelementen und der Schrägfläche 22 an der Innenausnehmung 16 führt zu einer Zugbeanspruchung der Spannelemente, wodurch das Einzugsteil 4 in die Aufnahme 5 der Werkzeugmaschinenspindel 3 gezogen wird.

Der Querschnitt des Schaftabschnitts 12 ist so gewählt, daß zwischen der Kegelmantelfläche 14 des Schaftabschnitts 12 und der in der Aufnahme 5 der Werkzeugmaschinenspindel 3 gegebenen Kegelmantelfläche 15 ein Spiel gegeben ist. Durch diese Maßnahme werden bei der Messung der Einzugskraft die Reibkräfte zwischen dem Schaftabschnitt 12 und der Aufnahme 5 ausgeschaltet.

Wie es in Fig. 1 gezeigt ist, ist im Zylinderabschnitt 18 des Einzugsteils 4 eine zentrale Gewindebohrung 24 ausgebildet, in welche ein Endabschnitt 34 der nachstehend näher erläuterten Dehnschraube 8 geschraubt ist.

Das Stützteil 6 ist in diesem Ausführungsbeispiel in Form einer rotationssymmetrischen Glocke ausgebildet, welche einen Abschnitt 26 mit einer zylindrischen Innenmantelfläche 28 zur Aufnahme des Zylinderabschnitts 18 des Einzugsteils 4 und einen sich in Richtung vom Einzugsteil 4 weg verjüngenden Abschnitt 30 aufweist. Bei Ankupplung der Einzugskraftmeßvorrichtung 2 an die Werkzeugmaschinenspindel 3 stützt sich das Stützteil 6 über eine als Stützfläche fungierende ringförmige Planfläche 27 des Abschnitts 26 an einer entsprechenden Gegenfläche 29 der Werkzeugmaschinenspindel 3 ab. An der Spitze des sich verjüngenden Abschnitts 30 ist eine mit der Gewindebohrung 24 im Zylinderabschnitt 18 des Einzugsteils 4 fluchtende Gewindebohrung 32 ausgebildet, in welche der andere Endabschnitt 36 der Dehnschraube 8 geschraubt ist.

Die Querschnitte des Einzugsteils 4 und des Stützteils 6 sind unter Berücksichtigung der bei Ankupplung an die Werkzeugmaschinenspindel zu erwartenden maximalen Kräfte so gewählt, daß sie eine möglichst geringe Formänderung, d.h. Dehnung bzw. Stauchung erfahren, die nur einen geringen Einfluß auf das Meßergebnis hat, der bei der Berechnung der Einzugskraft berücksichtigt wird.

Die als Verformungskörper fungierende Dehnschraube 8 verbindet das Einzugsteil 4 mit dem Stützteil 6. Zu diesem Zweck sind die beiden Endabschnitte 34 und 36 der Dehnschraube 8 in Form von Gewindeabschnitten mit dem Einzugsteil 4 bzw. dem Stützteil 6 verschraubt, wie dies vorstehend bereits erwähnt wurde. Wie es in Fig. 1 gezeigt ist, weisen die beiden Endabschnitte 34 und 36 gegenüber einem dazwischen liegenden Mittelabschnitt 38 einen größeren Querschnitt auf. Dadurch wird unter anderem erreicht, daß eine bei Ankupplung der Einzugskraftmeßvorrichtung 2 an die Werkzeugmaschinenspindel auftretende Dehnung dieser Endabschnitte 34 und 36 im Vergleich zur Dehnung des Mittelabschnitts 38 gering ist und damit, wie im Fall des Einzugsteils 4 und des Stützteils 6, nur einen geringen Einfluß auf das Meßergebnis hat, der bei der Berechnung der Einzugskraft berücksichtigt wird.

Wie vorstehend erwähnt, stützt sich bei Ankupplung der Einzugskraftmeßvorrichtung 2 an die Werkzeugmaschinenspindel 3 das Stützteil 6 über seine Stützfläche 27 an der Stützfläche 29 der Werkzeugmaschinenspindel 3 ab. Das Einzugsteil 4 wird dabei relativ zum Stützteil 6 in die Aufnahme 5 gezogen, wodurch die Dehnschraube 8 auf Zug beansprucht wird. Dies hat wiederum zur Folge, daß die Dehnschraube 8 in ihrem Mittelabschnitt 38 als dem schwächsten Abschnitt eine der Einzugskraft proportionale Längenänderung, d.h. Dehnung, erfährt, welche zur Messung der Einzugskraft herangezogen wird. Der Querschnitt des Mittelabschnitts 38 der Dehnschraube 8 ist im besonderen so gewählt, daß selbst bei zu erwartenden Maximalkräften eine elastische Formänderung erfolgt, die also dem Hookeschen ε = σ/E Gesetz genügt, wobei ε die elastische Dehnung, σ die Normalspannung und E den Elastizitätsmodul repräsentiert.

Die Messung der Dehnung des Dehnteils 8 und damit der auf das Einzugsteil 4 wirkenden Einzugskraft erfolgt erfindungsgemäß mittels einer mechanischen Meßuhr 10. In Kenntnis des linearen Einzugskraft-Dehnung-Zusammenhangs der Dehnschraube 8 läßt sich somit in einfacher Weise die Dehnung der Dehnschraube 8 in eine proportionale Einzugskraft umwandeln.

Die Querschnitte der Bauteile der Einzugskraftmeßvorrichtung 2, d.h. des Einzugsteils 4, des Stützteils 6 und der Dehnschraube 8 sind, wie es vorstehend bereits erwähnt wurde, im besonderen so gewählt, daß die bei Ankupplung der Einzugskraftmeßvorrichtung 2 an die Werkzeugmaschinenspindel zu erwartenden Maximalkräfte eine Gesamtdehnung aller Bauteile bewirken, die noch in einem zulässigen Bereich liegt, um einen Kontakt zwischen dem Schaftabschnitt 12 und der Aufnahme 5 zu verhindern und um dadurch die Reibkräfte zwischen der Kegelmantelfäche 14 des Schaftabschnitts 12 und der in der Aufnahme 5 gegebenen Kegelmantelfläche 15 auszuschalten.

Wie es in Fig. 1 zu sehen ist, ist die Dehnschraube 8 mittels Muttern 39 bzw. 40, die auf die Endabschnitte 34 bzw. 36 geschraubt sind und damit die Dehnschraube 8 gegen das Einzugsteil 4 bzw. das Stützteil 6 spannen, gegen ein Lockern oder Lösen gesichert. Die Dehnschraube 8 weist ferner eine sich über ihre ganze Länge erstreckende axiale Innenbohrung 42 auf, die aus drei Bohrungsabschnitten 44, 46, 48 mit in dieser Reihenfolge zunehmenden Innendurchmessern besteht. Der Bohrungsabschnitt 44 der Innenbohrung 42, der den kleinsten Innendurchmesser aufweist, ist in dem Endabschnitt 34 der Dehnschraube 8 ausgebildet, der im Zylinderabschnitt 18 des Einzugsteils 4 geschraubt ist, und mit einem Innengewinde versehen. Dieser Bohrungsabschnitt dient zur Aufnahme einer Stellschraube 50, beispielsweise in Form einer Innensechskantschraube, deren Funktion nachstehend erläutert wird. Der Bohrungsabschnitt 46 mit dem zweitgrößten Innendurchmesser erstreckt sich in axialer Richtung durch den Mittelabschnitt 38 bis etwa in die Mitte des Endabschnitts 36 der Dehnschraube 8. Der Bohrungsabschnitt 48 mit dem größten Innendurchmesser erstreckt sich vom Bohrungsabschnitt 46 ausgehend durch den verbleibenden Teil des Endabschnitts 36. Zwischen dem Bohrungsabschnitt 46 und dem Bohrungsabschnitt 48 ist eine kegelförmige Übergangsfläche 47 ausgebildet, an der eine kegelförmige Keilfläche einer im Bohrungsabschnitt 48 aufgenommenen geschlitzten Spannbuchse 52 anliegt. Die Spannbuchse 52 hat die Funktion, durch Anziehen einer Mutter 54, welche im Anschluß auf die Sicherungsmutter 40 ebenfalls auf den Endabschnitt 36 der Dehnschraube 8 geschraubt ist, eine sich durch den Bohrungsabschnitt 48 und in den Bohrungsabschnitt 46 der Dehnschraube 8 erstreckende rohrförmige Verlängerung 56 der Meßuhr 10 fest mit der Dehnschraube 8 zu verspannen, wie es in Fig. 1 dargestellt ist. Ein aus der rohrförmigen Verlängerung 56 der Meßuhr 10 ragender, als Bolzen fungierender Meßbolzen 60 der Meßuhr 58 erstreckt sich durch den Bohrungsabschnitt 46, bis er an die vorstehend erwähnte Stellschraube 50 stößt. Durch die vorstehend erwähnte Stellschraube 50 läßt sich die axiale Lage des Meßbolzens 60 einstellen und damit eine Vorspannung oder Feineinstellung der Meßuhr 10 vornehmen.

Die in diesem Ausführungsbeispiel verwendete Meßuhr 10 hat eine Auflösung von 0,001 mm. Zur Messung der Einzugskraft wird die Meßuhr 10 mittels der Stellschraube 50 mit ca. 0,1 mm vorgespannt und anschließend auf Null gestellt. Unter der Wirkung der Einzugskraft und der daraus resultierenden Dehnung der Dehnschraube 8 wird die Vorspannung der Meßuhr 10 proportional zur Einzugskraft abgebaut, so daß ein Zeigerausschlag im Gegenuhrzeigersinn erfolgt, wie es in Fig. 1 gezeigt ist. Zur direkten Kraftablesung werden für die jeweiligen Schnittstellenverbindungen spezifische Zifferblätter verwendet.

Im folgenden wird der Betrieb und die Funktionsweise der erfindungsgemäßen Einzugskraftmeßvorrichtung 2 erläutert.

Wie es vorstehend bereits erwähnt wurde, wird die Einzugskraftmeßvorrichtung 2 zur Messung der Einzugskraft eines auf Seiten der Werkzeugmaschinenspindel 3 vorgesehenen Spannsystems an die Werkzeugmaschinenspindel 3 angekuppelt. Zu diesem Zweck wird der Schaftabschnitt 12 des Einzugsteils 4 in die Aufnahme 5 an der Werkzeugmaschinenspindel 3 eingesetzt. Bei Betätigung des Spannsystems wird, wie es vorstehend ebenfalls bereits erwähnt wurde, das Einzugsteil 4 in die Aufnahme 5 gezogen, bis die Stützfläche 27 des Stützteils 6 mit der an der Werkzeugmaschinenspindel 3 vorgesehenen Stützfläche 29 in Kontakt kommt. Die weitere Einzugsbewegung des Einzugsteils 4 relativ zur Stützfläche 27 des Stützteils 6 bewirkt eine Längenänderung, d.h. Dehnung, der Dehnschraube 8 und damit einen Abbau der vor dem Einsatz der Einzugskraftmeßvorrichtung 2 erzeugten Vorspannung. Dieser Abbau der Vorspannung resultiert, wie es vorstehend erwähnt wurde, in einem negativen Zeigerausschlag der Meßuhr 10, wodurch auf dem Zifferblatt schließlich die Einzugskraft direkt abgelesen werden kann.

Mit der erfindungsgemäßen Einzugskraftmeßvorrichtung 2 wird trotz einer technisch relativ einfachen Gestaltungs- und Funktionsweise überraschenderweise eine hohe Meßgenauigkeit von +/- 3% erreicht, welche der Meßgenauigkeit derzeit gängiger, technisch sehr aufwendig ausgeführter, elektronisch arbeitender Einzugskraftmeßvorrichtungen sehr nahe kommt.

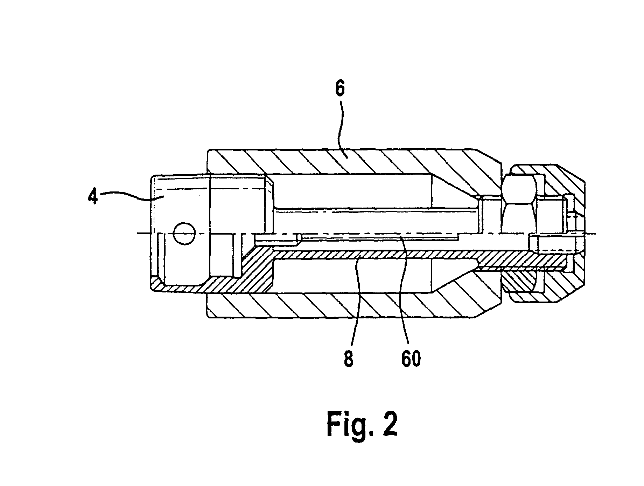

Fig. 1a zeigt eine Abwandlung des in Fig. 1 gezeigten ersten Ausführungsbeispiels der erfindungsgemäßen Einzugskraftmeßvorrichtung 2. Aus Gründen der Einfachheit ist in Fig. 2 die in Fig. 1 dargestellte Meßuhr 10 nicht mehr dargestellt. In dieser Abwandlung sind das Einzugsteil 4 und die Dehnschraube 8 in einem Stück gefertigt, so daß zusätzlich zu der aus der einstückigen Gestaltung resultierenden einfacheren Fertigung die in Fig. 1 gezeigte Sicherungsmutter 39 entfällt. Dies ist im besonderen bei Schnittstellenverbindungen mit kleinen Durchmessern, beispielsweise bei HSK-25-, HSK-30-oder HSK-32-Schnittstellen, wo also das Einzugsteil 4 einen kleinen Durchmesser aufweist, möglich.

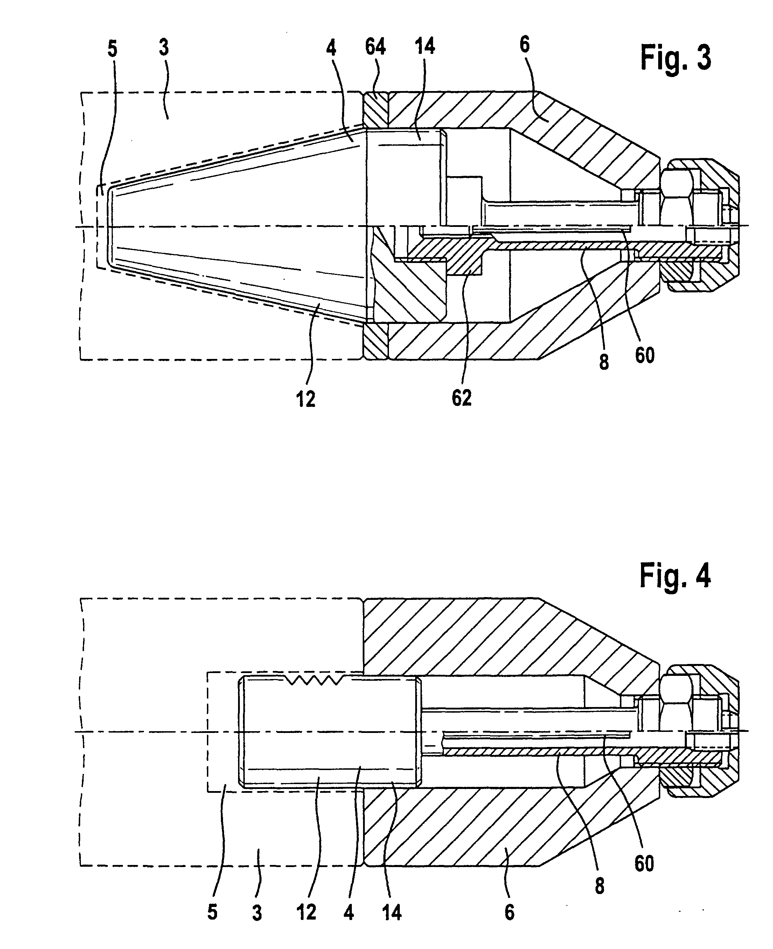

Fig. 3 zeigt ein zweites Ausführungsbeispiel der erfindungsgemäßen Einzugskraftmeßvorrichtung für den Einsatz an einer Steilkegel-Schnittstellenverbindung und Fig. 4 zeigt schließlich ein drittes Ausführungsbeispiel der erfindungsgemäßen Einzugskraftmeßvorrichtung für den Einsatz an einer VDI-Schnittstellenverbindung. Wie im Fall von Fig. 2 ist auch in den Figuren 3 und 4 aus Gründen der Einfachheit die in Fig. 1 gezeigte Meßuhr 10 nicht mehr dargestellt. Das zweite und dritte Ausführungsbeispiel entsprechen in den wesentlichen Merkmalen dem ersten Ausführungsbeispiel, d.h., daß der prinzipielle Aufbau mit Einzugsteil, Stützteil, Verformungskörper und Krafterfassungsvorrichtung sowie die Funktionsweise unverändert bleiben.

Im zweiten Ausführungsbeispiel weist der Schaftabschnitt 12 gemäß der Darstellung in Fig. 3 die Form eines Steilkegelschafts und im dritten Ausführungsbeispiel gemäß der Darstellung in Fig. 4 die Form eines zylindrischen VDI-Schafts auf. Es wird an dieser Stelle ausdrücklich darauf hingewiesen, daß die erfindungsgemäße Einzugskraftmeßvorrichtung im Prinzip auf alle Schnittstellenverbindungen anwendbar ist, bei denen die Kupplung eines Bauteils, beispielsweise eines Werkzeugträgerteils, an ein zweites Bauteil, beispielsweise an eine Werkzeugmaschinenspindel, über eine axiale Einzugskraft erfolgt.

Wie es aus der Darstellung von Fig. 3 hervorgeht, ist in diesem zweiten Ausführungsbeispiel die in Fig. 1 gezeigte Sicherungsmutter 38 des ersten Ausführungsbeispiel durch einen als Ringvorsprung ausgebildeten Bund 62, der vorzugsweise für eine Betätigung mit einem Schraubenschlüssel oder einem anderen Werkzeug ausgebildet ist, ersetzt. Des weiteren kann zwischen der Werkzeugmaschinenspindel 3 und der Einzugskraftmeßvorrichtung, sofern dies aus Montagegründen erforderlich erscheint, ein zusätzlicher Adapterring 64 eingesetzt werden.

Im dritten Ausführungsbeispiel sind, wie es in Fig. 4 dargestellt ist, die Dehnschraube 8 und das Einzugsteil 4 wie im Fall der in Fig. 2 gezeigten Abwandlung der ersten Kraftmeßvorrichtung 2 einstückig miteinander ausgebildet.

Im ersten und zweiten Ausführungsbeispiel war die Dehnschraube 8 sowohl mit dem Einzugsteil 4 wie auch dem Stützteil 8 verschraubt. Die vorliegende Erfindung ist jedoch nicht nur darauf beschränkt. Ebenso wäre es auch denkbar, die Dehnschraube 8 auf eine andere Art und Weise, beispielsweise in Form einer Bajonett-Verankerung, form- und/oder kraftschlüssig mit dem Einzugsteil 4 und dem Stützteil 6 zu verbinden. Wie es in der Abwandlung des ersten Ausführungsbeispiels in Fig. 2 und im dritten Ausführungsbeispiel in Fig. 4 gezeigt ist, können im Fall von geringen Durchmessern das Einzugsteil 4 und die Dehnschraube 8 beispielsweise auch einstückig miteinander ausgebildet sein. Des weiteren wäre es in den vorstehend genannten Fällen, in denen die Dehnschraube 8 mit dem Stützteil 6 verschraubt ist, auch möglich, die Dehnschraube 8 auf eine andere Weise form- und kraftschlüssig mit dem Stützteil 6 zu verbinden, indem beispielsweise der Endabschnitt 36 der Dehnschraube 8 durch einen einstückig ausgebildeten Haltering oder Bund am Stützteil 6 bei Zugbeanspruchung hält.

Es wird schließlich noch darauf hingewiesen, daß die Merkmale der vorstehend beschriebenen Ausführungsbeispiele selbstverständlich beliebig miteinander kombiniert werden können, sofern dies technisch möglich ist und zweckmäßig erscheint.

## Patentansprüche

1. Einzugskraftmeßvorrichtung (2) zum Messen einer Einzugskraft, die ein Werkzeugträgerteil, wie z.B. ein Werkzeugsystemmodul in Form einer Grundaufnahme, bei Ankupplung an eine Handhabungseinrichtung (3), wie z.B. eine Spindel einer Werkzeugmaschine, bei Betätigung eines auf Seiten der Handhabungseinrichtung (3) vorgesehenen Spannsystems in eine Axialrichtung dieser Bauteile erfährt, umfassend
ein Stützteil (6) mit einer Stützfläche (27), welche mit einer an der Handhabungseinrichtung (3) vorgesehenen Stützfläche in Anlage zu bringen ist,
ein relativ zum Stützteil (6) bewegbares Einzugsteil (4), welches bei Betätigung des Spannsystems eine in Axialrichtung wirkende Einzugskraft erfährt,
einen zwischen das Stützteil (6) und das Einzugsteil (4) geschatteten, mit diesen funktionell in Verbindung stehenden Verformungskörper (8), welcher in Abhängigkeit von der auf das Einzugsteil (4) aufgebrachten Einzugskraft eine Verformung erfährt, und
eine Meßeinrichtung (10), die die Verformung des Verformungskörpers (8) erfaßt und den Verformungsgrad anzeigt, welcher der Stärke der Einzugskraft proportional ist, **dadurch gekennzeichnet, daß**
die Meßeinrichtung (10) als eine mechanische Meßuhr ausgeführt ist, die die Verformung des Verformungskörpers (8) mechanisch erfaßt

2. Einzugskraftmeßvorrichtung nach Anspruch 1, **dadurch gekennzeichnet, daß** der Verformungskörper (8) so gewählt und unter Berücksichtigung der bei Betätigung des Spannsystems zu erwartenden Maximalkräfte dimensioniert ist, daß die bei Betätigung des Spannsystems auftretenden Verformungen dem Hookeschen Gesetz genügen, d.h. elastisch sind.

3. Einzugskraftmeßvorrichtung nach Anspruch 1 oder 2, **dadurch gekennzeichnet, daß** die Stützfläche (27) des Stützteils (6) als eine ringförmige Planfläche ausgeführt ist, die mit einer auf Seiten der Handhabungseinrichtung (3) vorgesehenen ringförmigen Planfläche (29) in Anlage zu bringen ist.

4. Einzugskraftmeßvorrichtung nach einem der Ansprüche 1 bis 3, **dadurch gekennzeichnet, daß** das Einzugsteil (4) einen in eine auf Seiten der Handhabungseinrichtung (3) vorgesehene axiale Aufnahme einzuziehenden kegelförmigen Schaftabschnitt (12) aufweist.

5. Einzugskraftmeßvorrichtung nach Anspruch 4, **dadurch gekennzeichnet, daß** die Querschnitte des Stützteils (6), des Einzugsteils (4) und des Verformungskörpers (8) so gewählt sind, daß selbst im Fall des Auftretens zu erwartender Maximalkräfte der Schaftabschnitt (12) des Einzugsteils (4) mit Spiel in die Aufnahme auf Seiten der Handhabungseinrichtung (3) einziehbar ist

6. Einzugskraftmeßvorrichtung nach Anspruch 5, **dadurch gekennzeichnet, daß** der Schaftabschnitt (12) in Form eines Hohlschaftkegels oder Steilkegels ausgebildet ist.

7. Einzugskraftmeßvorrichtung nach einem der Ansprüche 1 bis 3, **dadurch gekennzeichnet, daß** das Einzugsteil (4) einen in eine auf Seiten der Handhabungseinrichtung (3) vorgesehene axiale Aufnahme einzuziehenden zylindrischen Schaftabschnitt (12) aufweist.

8. Einzugskraftmeßvorrichtung nach einem der vorhergehenden Ansprüche, **dadurch gekennzeichnet, daß** das Stützteil (6) in Form einer Glocke ausgebildet ist und das Einzugsteil (4) einen axial an den Schaftabschnitt (12) anschließenden, in der Glocke aufgenommenen Zylinderabschnitt (18) aufweist.

9. Einzugskraftmeßvorrichtung nach Anspruch 8, **dadurch gekennzeichnet, daß** der Verformungskörper (8) als ein mit dem Zylinderabschnitt (18) des Einzugsteils (4) und/oder dem Stützteil (6) fest verbundener Dehnkörper ausgeführt ist.

10. Einzugskraftmeßvorrichtung nach Anspruch 9, **dadurch gekennzeichnet, daß** der Dehnkörper als eine mit dem Zylinderabschnitt (18) des Einzugsteils (4) und/oder dem Stützteil (6) verschraubte, Dehnschraube ausgeführt ist

11. Einzugskraftmeßvorrichtung nach Anspruch 10, **dadurch gekennzeichnet, daß** die Dehnschraube eine axiale Bohrung (42) aufweist, in der ein mit der Einrichtung (10) funktionell in Verbindung stehender Bolzen (60) eingesetzt ist.

12. Einzugskraftmeßvorrichtung nach Anspruch 11, **dadurch gekennzeichnet, daß** die Dehnschraube an dem in den Zylinderabschnitt (18) des Einzugsteils (4) geschraubten Endabschnitt (34) mit einer Einstelleinrichtung (50) versehen ist, die durch eine Einstellung der axialen Lage des in der Dehnschraube eingesetzten Bolzens (60) eine Vorspannung der Einrichtung (10) ermöglicht.

13. Einzugskraftmeßvorrichtung nach Anspruch 12, **dadurch gekennzeichnet, daß** die Einstelleinrichtung (50) als eine Stellschraube ausgeführt ist, die in eine Gewindebohrung (44) geschraubt ist, welche in dem in den Zylinderabschnitt (18) des Einzugsteils (4) geschraubten Endabschnitt (34) der Dehnschraube ausgebildet ist

14. Einzugskraftmeßvorrichtung nach einem der Ansprüche 11 bis 13, **dadurch gekennzeichnet, daß** die Meßeinrichtung (10) einen Meßbolzen (60) autweist, der mit dem in der Dehnschraube eingesetzten Bolzen funktionell in Verbindung steht oder in den in der Dehnschraube eingesetzten Bolzen integriert ist.

## Claims

1. A device (2) for measuring a pulling-in force to which a tool support part, such as a tool system module in the form of a basic tool mounting means, is subjected in an axial direction of these components during coupling to a handling device (3), such as a spindle of a machine tool, during operation of a clamping system provided on the side of the handling device (3), comprising
a support part (6) with a support surface (27), which is to be brought into bearing contact with a support surface provided on the handling device (3),
a pulling-in part (4), which is movable relative to the support part (6), and which is subjected to a pulling-in force acting in axial direction during operation of the clamping system,
a deformation body (8) arranged between the support part (6) and to the pulling-in part (4) and operationally connected therewith, which is subjected to deformation as a function of the pulling-in force applied to the pulling-in part (4), and
a device (10) for sensing the deformation of the deformation body (8) and indicating the degree of deformation, which is proportional to the magnitude of the pulling-in force, **characterized in that** the measuring device (10) is designed as a mechanical dial gauge (10) that mechanically detects deformation of the deformation body (8).

2. A device for measuring pulling-in force according to claim 1, **characterized in that** the deformation body (8) is chosen and, in view of the maximum forces to be expected during operation of the clamping system, is dimensioned such that the deformations which occur during operation of the clamping system obey Hooke's law, or in other words are elastic.

3. A device for measuring pulling-in force according to claim 1 or 2, **characterized in that** the support surface (27) of the support part (6) is designed as an annular plane surface, which is to be brought into bearing contact with an annular plane surface (29) provided on the side of the handling device (3).

4. A device for measuring pulling-in force according to one of claims 1 to 3, **characterized in that** the pulling-in part (4) comprises a tapered shank portion (12) to be pulled into an axial mounting means provided on the side of the handling device (3).

5. A device for measuring pulling-in force according to claim 4, **characterized in that** the cross sections of the support part (6), of the pulling-in part (4) and of the deformation body (8) are chosen such that the shank portion (12) of the pulling-in part (4) can be pulled with clearance into the mounting means provided on the side of the handling device (3) even in the event of the maximum forces to be expected.

6. A device for measuring pulling-in force according to claim 5, **characterized in that** the shank portion (12) has the form of a hollow-shank taper or steep taper.

7. A device for measuring pulling-in force according to one of claims 1 to 3, **characterized in that** the pulling-in part (4) has a cylindrical shank portion (12) to be pulled into an axial mounting means provided on the side of the handling device (3).

8. A device for measuring pulling-in force according to one of the preceding claims, **characterized in that** the support part (6) has the form of a bell, and the pulling-in part (4) has a cylindrical portion (18), which axially adjoins the shank portion (12) and is received in the bell.

9. A device for measuring pulling-in force according to claim 8, **characterized in that** the deformation body (8) is designed as an extensible body connected firmly to the cylindrical portion (18) of the pulling-in part (4) and/or to the support part (6).

10. A device for measuring pulling-in force according to claim 9, **characterized in that** the extensible body is designed as a reduced-shaft bolt, which is screwed together with the cylindrical portion (18) of the pulling-in part (4) and/or the support part (6).

11. A device for measuring pulling-in force according to claim 10, **characterized in that** the reduced-shaft bolt is provided with an axial bore (42), in which there is inserted a pin (60) which is operatively connected to the device (10).

12. A device for measuring pulling-in force according to claim 11, **characterized in that** the reduced-shaft bolt is provided on the end portion (34) screwed into the cylindrical portion (18) of the pulling-in part (4) with an adjusting device (50), which, by adjustment of the axial position of the pin (60) inserted in the reduced-shaft bolt, permits an initial stress to be applied to the device (10).

13. A device for measuring pulling-in force according to claim 12, **characterized in that** the adjusting device (50) is designed as a setscrew, which is screwed into a threaded bore (44) formed in the end portion (34) of the reduced-shaft bolt, which portion is screwed into the cylindrical portion (18) of the pulling-in part (4).

14. A device for measuring pulling-in force according to one of claims 11 to 13, **characterized in that** the device (10) includes a measuring pin (60) operatively connected with the pin inserted in the reduced-shaft bolt or forming a portion of the pin inserted in the reduced-shaft bolt.

## Revendications

1. Dispositif de mesure de la force de tirage (2) pour mesurer une force de tirage, qui est exercée sur une partie d'un porte-outil, tel qu'un module d'un système d'outil formant un logement de base, au moment du couplage à une unité de maniement (3), telle qu'une broche d'une machine-outil, pendant la manipulation d'un système de serrage prévu du côté de l'unité de maniement (3), dans le sens axial de ces pièces, comprenant
une pièce d'appui (6) avec une surface d'appui (27), qui doit être amenée en contact avec une surface d'appui prévue sur l'unité de maniement (3),
une pièce à tirer (4), qui est mobile par rapport à la pièce d'appui (6) et sur laquelle est exercée une force de tirage agissant dans le sens axial au moment de la manipulation du système de serrage,
un corps de déformation (8), intercalé entre la pièce d'appui (6) et la pièce à tirer (4) et en liaison fonctionnelle avec celles-ci, lequel subit une déformation en fonction de la force de tirage appliquée sur la pièce à tirer (4), et
un dispositif de mesure (10), qui enregistre la déformation du corps de déformation (8) et indique le degré de déformation, qui est proportionnel à l'importance de la force de tirage, **caractérisé en ce que**
le dispositif de mesure (10) est conçu sous forme de montre-compteur mécanique, qui enregistre mécaniquement la déformation subie par le corps de déformation (8).

2. Dispositif de mesure de la force de tirage selon la revendication 1, **caractérisé en ce que** le corps de déformation (8) est dimensionné en tenant compte des forces maximales à escompter pendant la manipulation du système de serrage et choisi, de telle sorte que les déformations apparaissant pendant la manipulation du système de serrage satisfont à la loi de Hooke, c'est-à-dire sont des déformations élastiques.

3. Dispositif de mesure de la force de tirage selon la revendication 1 ou 2, **caractérisé en ce que** la surface d'appui (27) de la pièce d'appui (6) est conçue sous forme de surface plane annulaire, qui doit être amenée en contact avec une surface plane (29) annulaire prévue du côté de l'unité de maniement (3).

4. Dispositif de mesure de la force de tirage selon l'une quelconque des revendications 1 à 3, **caractérisé en ce que** la pièce à tirer (4) est munie d'une partie formant tige (12) tronconique à introduire dans un logement axial prévu du côté de l'unité de maniement (3).

5. Dispositif de mesure de la force de tirage selon la revendication 4, **caractérisé en ce que** les sections de la pièce d'appui (6), de la pièce à tirer (4) et du corps de déformation (8) sont choisies de telle sorte que, même en cas d'apparition des forces maximales à escompter, la partie formant tige (12) de la pièce à tirer (4) peut être insérée avec du jeu dans le logement du côté de l'unité de maniement (3).

6. Dispositif de mesure de la force de tirage selon la revendication 5, **caractérisé en ce que** la partie formant tige (12) est conçue sous forme de cône à tige creuse ou de cône à angle obtus.

7. Dispositif de mesure de la force de tirage selon l'une quelconque des revendications 1 à 3, **caractérisé en ce que** la pièce à tirer (4) comporte une partie formant tige (12) cylindrique à introduire dans un logement axial prévu du côté de l'unité de maniement (3).

8. Dispositif de mesure de la force de tirage selon l'une quelconque des revendications précédentes, **caractérisé en ce que** la pièce d'appui (6) est conçue sous forme de cloche et la pièce à tirer (4) comporte une partie cylindrique (18) prolongeant dans le sens axial la partie formant tige (12) et logée dans la cloche.

9. Dispositif de mesure de la force de tirage selon la revendication 8, **caractérisé en ce que** le corps de déformation (8) est conçu sous forme de corps extensible assemblé de manière fixe avec la partie cylindrique (18) de la pièce à tirer (4) et/ou avec la pièce d'appui (6).

10. Dispositif de mesure de la force de tirage selon la revendication 9, **caractérisé en ce que** le corps extensible est conçu sous forme de vis extensible, vissée avec la partie cylindrique (18) de la pièce à tirer (4) et/ou avec la pièce d'appui (6).

11. Dispositif de mesure de la force de tirage selon la revendication 10, **caractérisé en ce que** la vis extensible comporte une forure (42) axiale, dans laquelle est inséré un boulon (60) en liaison fonctionnelle avec le dispositif de mesure (10).

12. Dispositif de mesure de la force de tirage selon la revendication 11, **caractérisé en ce que** la vis extensible, sur la partie d'extrémité (34) vissée dans la partie cylindrique (18) de la pièce à tirer (4), est munie d'une unité de réglage (50), qui permet de mettre en précontrainte le dispositif de mesure (10) par un réglage de la position axiale du boulon (60) inséré dans la vis extensible.

13. Dispositif de mesure de la force de tirage selon la revendication 12, **caractérisé en ce que** l'unité de réglage (50) est conçue sous forme de vis de réglage, qui est vissée dans une forure taraudée (44), qui est réalisée dans la partie d'extrémité (34) de la vis extensible, vissée dans la partie cylindrique (18) de la pièce à tirer (4).

14. Dispositif de mesure de la force de tirage selon l'une quelconque des revendications 11 à 13, **caractérisé en ce que** le dispositif de mesure (10) comporte un boulon de mesure (60), qui est en liaison fonctionnelle avec le boulon inséré dans la vis extensible ou qui est intégré dans le boulon inséré dans la vis extensible.
